# EUROPÄISCHE PATENTSCHRIFT

(11) **EP 0 605 479 B1**
(45) Veröffentlichungstag und Bekanntmachung des Hinweises auf die Patenterteilung: **17.05.1995**
(21) Anmeldenummer: 92919163.3
(22) Anmeldetag: 15.09.1992
(51) Int. Cl.: F01N 3/20, F01N 3/28

(54) **ABGASKATALYSATOR**
EXHAUST GAS CATALYTIC CONVERTER
POT CATALYTIQUE

(30) Priorität: 28.09.1991 DE 4132439
(43) Veröffentlichungstag der Anmeldung: 13.07.1994
(73) Patentinhaber: Emitec Gesellschaft für Emissionstechnologie mbH, 53797 Lohmar (DE)
(72) Erfinder: BAYER, Jürgen, D-7300 Esslingen 1 (DE); GRÜNER, Andreas, D-7320 Göppingen (DE); HUMPOLIK, Bohumil, D-7140 Ludwigsburg (DE); LOCHMAHR, Karl, D-7143 Vailhingen/Enz (DE); REIMET, Thomas, D-7150 Korntal-Münchingen 2 (DE)
(74) Vertreter: Kahlhöfer, Hermann, Dipl.-Phys.
(86) Internationale Anmeldenummer: EP9202116
(87) Internationale Veröffentlichungsnummer: WO9307364

(56) Entgegenhaltungen:
- EP-A- 0 233 860
- EP-A- 0 275 372
- EP-A- 0 401 646
- DE-U- 8 621 551
- US-A- 3 889 464

## Beschreibung

Die Erfindung betrifft einen Abgaskatalysator, insbesondere für einen Verbrennungsmotor, mit einem aus Metallblechen aufgebauten und eine vom Abgas durchströmbare Struktur aufweisenden Trägerkörper für eine katalytische Beschichtung, der in einem das Abgas führenden Strömungskanal angeordnet ist und der extern aufheizbar ist.

Auch bei Abgaskatalysatoren dieser Bauart liegt bei höheren Betriebstemperaturen ein verbesserter Wirkungsgrad bei der katalytischen Nachverbrennung der Abgase vor. Um insbesondere in der Kaltstartphase, in der der Abgaskatalysator noch niedrige Betriebstemperaturen aufweist, ein verbessertes Konvertierungsverhalten zu erzielen, ist es bekannt, den metallischen Trägerkörper elektrisch aufzuheizen. Hierbei wird als Stromquelle die im Fahrzeug vorhandene Stromversorgung eingesetzt. Hat der Abgaskatalysator bzw. der mit der katalytischen Beschichtung versehene Trägerkörper durch das Durchströmen des heißen Abgases seine Betriebstemperatur erreicht, so kann die elektrische Beheizung abgestellt werden.

Bei einem aus der WO 89/10471 bekannten Abgaskatalysator der eingangs genannten Art, ist ein elektrisch leitfähiger Trägerkörper vorgesehen, der aus gewickelten, gestapelten oder anderweitig geschichteten Lagen korrosionsfester Bleche besteht. Die Bleche sind hierbei derart angeordnet, daß der Trägerkörper für eine katalytische Beschichtung eine vom Abgas durchströmbare Struktur aufweist. Diese wird insbesondere dadurch erzielt, daß abwechselnd Glattbleche und Wellbleche übereinander geschichtet werden. Ein derartiger Trägerkörper, der unterschiedliche Querschnittsformen aufweisen kann, wird dann in einem den Abgasstrom führenden Strömungskanal oder Mantelgehäuse aufgenommen. Zum Aufheizen des Trägerkörpers wird dieser an eine Spannungsquelle, insbesondere der Stromversorgung des Kraftfahrzeuges, angelegt. Der elektrische Widerstand des Trägerkörpers dient zu dessen Aufheizung. Um eine elektrische Unterteilung zu erzielen, weist der Trägerkörper Spalte und/oder elektrisch isolierende Zwischenschichten auf.

Bei einem aus der US-PS 3 770 389 bekannten Abgaskatalysator ist ein aus keramischem Material bestehender Trägerkörper für eine katalytische Beschichtung vorgesehen, der die Form eines mit einer ringförmigen Querschnittsfläche ausgebildeten Hohlzylinders aufweist. In dem zentralen Hohlraum des in Axialrichtung durchströmten Trägerkörpers ist ein aus Metallblechen bestehender Trägerkörper mit einer katalytischen Beschichtung angeordnet, der im wesentlichen aus einem axial angeordneten Metallstab besteht, der spiralförmig von einem Stahlband umgeben ist. Wird ein derartiger metallischer Trägerkörper mit einer Spannungsquelle verbunden, so führt dessen elektrischer Widerstand zu einer Erwärmung. Dies hat in der Startphase einen verbesserten Wirkungsgrad zur Folge und führt zu einer Aufheizung des monolithischen Trägerkörpers. Hat dieser seine Betriebstemperatur erreicht, so wird der metallische Trägerkörper von der Spannungsquelle getrennt.

Eine andere Bauart ist aus der DE-AS 22 30 663 bekannt. Hierbei wird ein keramischer, als Hohlzylinder ausgebildeter Trägerkörper durch ein zentral angeordnetes elektrisches Heizelement beheizt. Das selbstisolierend ausgebildete Heizelement besitzt eine in einem Metallzylinder angeordnete Heizwendel, die mit einer Stromversorgung verbunden ist.

EP-A-0 233 860 beschreibt eine Vorrichtung für die Reinigung von Verbrennungsabgasen einer Verbrennungskraftmaschine, insbesondere eines Dieselmotors. Diese Vorrichtung weist ein Rückhalte- bzw. Filterorgan auf, in welchem feinteilige Kondensate oder Partikel, wie zum Beispiel Ruß, zurückgehalten werden können. Der Filterkörper des Partikel-Rückhalte- bzw. Filterorgans besteht beispielsweise aus einem gewickelten Stahlvliesmaterial mit katalysatorbeschichteten Metallelementen mit Zwischenräumen oder einem katalysatorbeschichteten Wabenfilter. Wenn sich zum Beispiel Ruß in dem Filterorgan nach längerem Betrieb der Verbrennungskraftmaschine festsetzt, muß diese Schicht von der katalytischen Oberfläche entfernt werden. Dies geschieht durch ein ebenfalls an seiner Oberfläche mit einem katalytischen Belag versehenes Abbrand-Initiationsorgan (Heizpatrone), dessen (deren) Oberfläche unmittelbar an dem Filterkörper anliegt. Durch elektrische Beheizung des Abbrand-Initiationsorgans wird an seiner Oberfläche und damit auch im Filterkörper ein Abbrennen der Rußschicht eingeleitet, indem die unmittelbar an der Heizpatrone entstehende Abbrandfront in den Filterkörper überspringt und sich dort durch den Filterkörper ausbreitet.

US-A-3,889,464 beschreibt eine Ausgestaltung eines katalytischen Konverters, dessen an ihren Innenoberflächen katalytisch beschichteten Kanälen eine Wabenstruktur bilden, und wobei entlang der Zentren der Kanäle Drähte gezogen sind, die elektrisch ins Leere geschaltet und zwischen Anschlüssen jeweils an den Stirnseiten des Wabenkörpers angeschlossen sind. Dies führt zu einer indirekten Beheizung der katalytischen Oberfläche des Wabenkörpers. In einer anderen Ausgestaltung wird der katalytische Konverter im wesentlichen durch in einem Hohlraum sich entlang der Strömungsrichtung des Fluids erstreckende, ebenfalls beheizbare Heizelemente gebildet, die an ihrer Oberfläche ebenfalls katalytisch beschichtet sind und somit zu einer direkten Beheizung des katalytischen Konverters führen.

Der Erfindung liegt die Aufgabe zugrunde, einen Abgaskatalysator der eingangs genannten Art zu schaffen, dessen Trägerkörper eine hohe mechanische Festigkeit aufweist, der schnell aufheizbar und dabei einfach herstellbar ist.

Zur Lösung dieser Aufgabe wird bei einem Abgaskatalysator mit den Merkmalen des Oberbegriffes des Patentanspruches 1 vorgeschlagen, daß außerhalb der Struktur mindestens ein gesondertes elektrisch isoliert ausgebildetes Heizelement vorhanden ist, das mit den Metallblechen des Trägerkörpers und/oder deren Beschichtung in enger thermischer Verbindung steht.

Gegenüber den bekannten, den elektrischen Widerstand des Trägerkörpers ausnützenden Abgaskatalysatoren wird durch die erfindungsgemäße Ausgestaltung erreicht, daß die elektrische Beheizung des aus Metallblechen bestehenden Trägerkörpers ohne Verringerung dessen mechanischer Festigkeit erreichbar ist. Bei den bekannten Abgaskatalysatoren können die eingangs geschilderten Spalte oder Isolierschichten im Trägerkörper zu dessen verringerter Festigkeit führen. Das beim erfindungsgemäßen Abgaskatalysator vorgesehene, mindestens eine separate Heizelement, ist demgegenüber von der Struktur isoliert und gesondert ausgebildet. Somit sind keine besonderen Isolationsmaßnahmen im Trägerkörper selbst erforderlich.

Der Wegfall von besonderen Isolationsmaßnahmen führt bei dem erfindungsgemäßen Abgaskatalysator zu einer einfachen und kostengünstigen Herstellung. Da das mindestens eine Heizelement mit den Metallblechen und/oder der Beschichtung des Trägerkörpers in Verbindung, insbesondere in Flächenkontakt steht, wird ein guter Wärmeübergang zwischen der Oberfläche des Heizelementes und den Metallblechen bzw. der Beschichtung gewährleistet. Hierdurch kann vermieden werden, daß punktuell zu starke Erwärmungen auftreten, die gegebenenfalls zu einer Zerstörung des Trägerkörpers führen können.

Der erfindungsgemäße Abgaskatalysator besitzt einen aus Metallblechen aufgebauten Trägerkörper, der mit dem hierin angeordneten Heizelement schnell aufgeheizt werden kann. Somit wird auch in der Startphase eines Verbrennungsmotors ein hoher Wirkungsgrad bei der Konvertierung des Abgases erzielt.

Vorteilhafte Weiterbildungen der Erfindung ergeben sich aus den Unteransprüchen.

Bei einer Ausgestaltung der Erfindung wird mindestens ein zylinderförmiges oder stabförmiges elektrisches Heizelement mit geringem Durchmesser vorgesehen. Derartige prinzipiell bekannte Heizelemente besitzen einen geringen Strömungswiderstand für den Abgasstrom. Bei einer Weiterbildung ist das mindestens eine stabförmige Heizelement an einem Wellblech des Trägerkörpers gehalten. Zweckmäßig ist hierbei die Wellenform des Wellbleches an den Durchmesser des Heizelementes angepaßt. Hierdurch wird ein besonders guter Flächenkontakt und damit ein guter Wärmeübergang zwischen der Oberfläche des Heizelementes und dem Wellblech erzielt, so daß ein Durchbrennen des Heizelementes oder punktuelle Überhitzungen des Wellbleches vermieden werden können. Weiterhin ist vorteilhaft, daß zusätzliche Maßnahmen zur Befestigung des Heizelementes innerhalb des Trägerkörpers oder an diesen entfallen.

Bei einer vorteilhaften Ausführungsform der Erfindung ist vorgesehen, daß der Trägerkörper aus mindestens einem spiralförmig gewickelten Glattblech besteht, wobei zwischen den Wickellagen des Glattbleches eine durchströmbare Wellblechlage angeordnet ist, in die mehrere stabförmige Heizelemente mit Abstand zueinander eingelagert sind. Die somit koaxial zum Abgasstrom angeordneten Heizelemente, die über den Querschnitt des Trägerkörpers verteilt sind, verleihen dem Trägerkörper eine besonders hohe Festigkeit. Durch die feste Einbindung in die Struktur des Trägerkörpers werden zusätzliche Befestigungselemente oder Maßnahmen zur Befestigung der Heizelemente entbehrlich. Der bei der Herstellung des Abgaskatalysators erforderliche Lötvorgang führt gleichzeitig zum Verlöten der Heizelemente mit den in deren Umgebung angeordneten Metallblechen. Vorteilhaft werden wiederum mehrere über die gesamte Querschnittsfläche verteilte Heizelemente vorgesehen, die zu einer besonders gleichmäßigen und sehr schnellen Aufheizung des Trägerkörpers führen.

Bei einer weiteren Ausführungsform der Erfindung ist mindestens ein elektrisches Heizelement vorgesehen, das eine ebene Flachform aufweist und als Glattbleche in den Trägerkörper aufgenommen ist. Alternativ kann vorgesehen sein, daß folienförmige Heizelemente auf die Bleche des Trägerkörpers aufgebracht sind.

Bei einer anderen Ausgestaltung der Erfindung kommen Heizelemente zum Einsatz, die derart biegsam sind, daß sie als spiralförmig gewickeltes Glattblech in dem Trägerkörper angeordnet werden können. Auch hier kann alternativ vorgesehen sein, daß folienförmige Heizelemente auf ein spiralförmig gewickeltes Blech aufgebracht werden.

Vorteilhaft sind die sich gegenüberliegenden Anschlüsse des mindestens einen elektrischen Heizelementes aus den Stirnseiten des Trägerkörpers herausgeführt und mit einer Spannungsquelle verbunden. Bei einer Weiterbildung sind die an einer Stirnseite angeordneten Anschlüsse mehrerer elektrischer Heizelemente miteinander verbunden sind, wobei zumindest eine Gruppe von Anschlüssen mit einem durch ein Mantelgehäuse des Trägerkörpers geführten Stromkabel versehen ist. Die Verbindung der Anschlüsse kann beispielsweise durch ein entsprechend angeordnetes leitfähiges Stahlblech erfolgen. Es ist lediglich für eine Gruppe von Anschlüssen eine Kabeldurchführung durch das Mantelgehäuse nötig, da die andere Gruppe von Anschlüssen leitend mit dem Mantelgehäuse selbst verbunden werden kann. In diesem Fall wird dann ein Pol der Stromversorgung an das Mantelgehäuse angeschlossen.

Gegenstand der vorliegenden Erfindung ist weiterhin ein Verfahren zur Herstellung eines Abgaskatalysators, insbesondere für einen Verbrennungsmotor, bei dem ein aus korrosionsfesten Metallblechen aufgebauter Trägerkörper, insbesondere aus Glatt- und Wellblechen, spiralförmig gewickelt oder anders geschlungen oder geschichtet wird. Bei einem derartigen Verfahren wird erfindungsgemäß vorgeschlagen, daß vor oder bei der Wicklung der Blechlagen zylinderförmige, der Struktur der Bleche angepaßte Heizelemente mit Abstand zueinander in die Blechlagen eingelegt werden und anschließend der Trägerkörper gewickelt wird. Hierdurch wird eine besonders gute Einbindung der Heizelemente in die Struktur des Trägerkörpers erreicht, wodurch weiterhin ein besonders fester Trägerkörper entsteht. Weiterhin entfällt ein nachträglicher Verfahrensschritt zum Einbringen der Heizelemente in den Trägerkörper. Durch diese Verfahrensdurchführung wird schließlich auch erreicht, daß eine besonders gute Wärmeübertragung zwischen den Heizelementen und dem Trägerkörper nach der Herstellung vorliegt.

Bei einer anderen Ausgestaltung des erfindungsgemäßen Verfahrens ist vorgesehen, daß ein ebenes biegsames Heizelement bei der Wicklung des Trägerkörpers zusammen mit dem Glatt- und Wellblech eingewickelt wird. Auch in diesem Fall wird eine besonders gute Einbindung des Heizelementes in die Struktur des Trägerkörpers erzielt.

Bei einer anderen Ausführungsform der Erfindung ist vorgesehen, daß der Trägerkörper aus in Sternwickeltechnik angeordneten Metallblechen besteht und in den Trägerkörper ein vorgeformtes Heizelement eingebracht ist, das eine der Durchströmungsstruktur des Trägerkörpers angepaßte Formgebung aufweist. Ein derartiger Trägerkörper für einen Abgaskatalysator ist prinzipiell aus der DE-PS 40 16 276 bekannt. Vor dem Wickeln des Trägerkörpers wird das vorgeformte Heizelement in die Blechlagen des Trägerkörpers eingebracht. Nach dem Wickeln des Trägerkörpers ist das vorgeformte Heizelement fest in die Struktur des Trägerkörpers eingebunden. Auch bei einem derartigen, in Stemwickeltechnik hergestellten Trägerkörper führt der Wegfall von zusätzlichen Isolationsmaßnahmen und das eingebrachte Heizelement zu einer Erhöhung der Festigkeit des Trägerkörpers. Durch die dreidimensionale Formgebung des Heizelementes wird erreicht, daß die Wärmeeinleitung gleichmäßig und schnell über den gesamten Querschnitt des Trägerkörpers erfolgt. Hierbei kann vorteilhaft vorgesehen sein, daß das Heizelement eine dreidimensionale mäanderförmige Formgebung aufweist.

In weiterer Ausgestaltung der Erfindung wird vorgesehen, daß das Heizelement mit Versorgungsanschlüssen versehen ist, die außerhalb des Strömungskanals angeordnet sind.

Beim Einsatz von mehreren über den Querschnitt und der Tiefe des Trägerkörpers verteilten Heizelemente wird eine besonders gute und gleichmäßige Aufheizung des Trägerkörpers erzielt. Da die elektrischen Heizelemente selbstisolierend ausgebildet sind, entfallen spezielle Isolationsmaßnahmen.

Bei allen Ausführungsformen der Erfindung kommen vorteilhaft mehrere Heizelemente zum Einsatz, die über den Querschnitt und/oder in der Tiefe des Trägerkörpers verteilt angeordnet sind.

Die Erfindung sowie vorteilhafte Weiterbildungen ergeben sich aus den in der Zeichnung dargestellten Ausführungsformen, die nachfolgend beschrieben werden, auf die die Erfindung jedoch nicht beschränkt ist. Es zeigen:
- Fig. 1: einen schematischen Längsschnitt durch eine erste Ausführungsform der Erfindung,
- Fig. 2: den Schnitt längs der Linie II-II in Fig. 1,
- Fig. 3: eine schematische Darstellung zur Erläuterung der Herstellung des Trägerkörpers der Ausführungsform gemaß Fig. 1 und 2,
- Fig. 4: ein Heizelement für die Ausführungsform gemäß den Fig. 1 - 3, und
- Fig. 5: eine schematische Darstellung einer weiteren Ausführungsform mit in Sternwickeltechnik hergestelltem Trägerkörper.

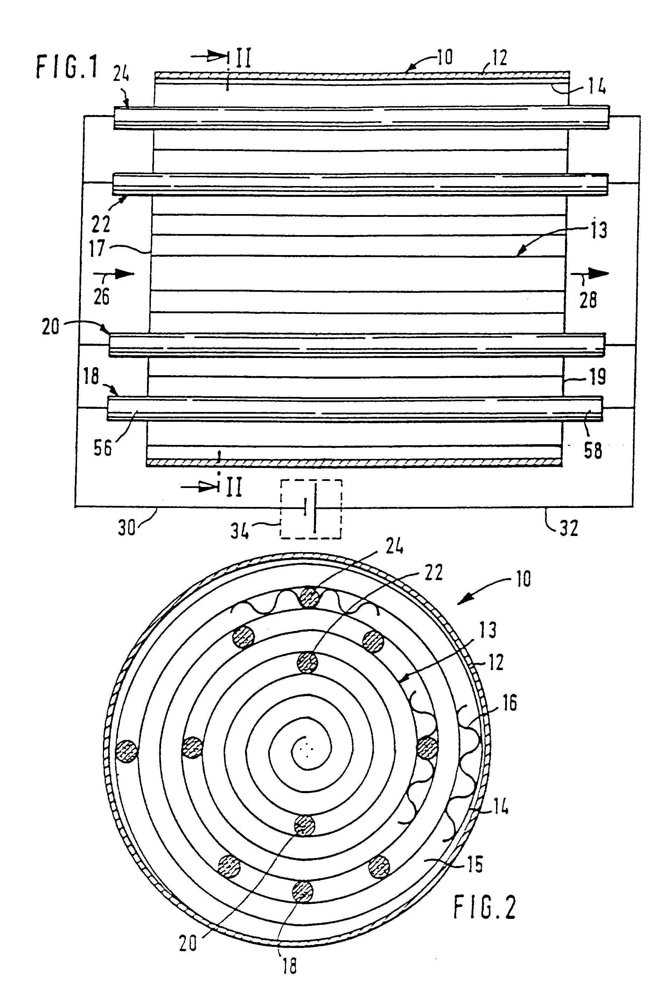

Die in den Fig. 1 und 5 lediglich schematisch dargestellten Abgaskatalysatoren dienen der Konvertierung bzw. katalytischen Nachverbrennung von Abgasen, die ein Verbrennungsmotor eines Personenkraftwagens freigibt. Mit den bei den Abgaskatalysatoren zum Einsatz kommenden Heizelementen soll in der Startphase des Verbrennungsmotors ein höherer Wirkungsgrad bei der Konvertierung des Abgases erzielt werden. Die Heizelemente heizen den Trägerkörper samt dessen katalytischer Beschichtung auf, wodurch der Abgaskatalysator schneller seine Betriebstemperatur erreicht.

Der in Fig. 1 im schematischen Längsschnitt dargestellte Abgaskatalysator (10) besitzt ein zylinderförmiges aus Edelstahl hergestelltes Mantelgehäuse (12), das einen ebenfalls im Querschnitt zylinderförmigen Trägerkörper (13) aufnimmt.

Wie aus Fig. 2 hervorgeht, besteht der Trägerkörper (13) aus einem spiralförmig gewickelten Glattblech (14), wobei die Wickellagen mit Abstand zueinander angeordnet sind. Der Abstand der Wickellagen des Glattbleches (14) wird durch ein Wellblech (16) sichergestellt, das zwischen sich gegenüberliegenden Wickellagen angeordnet ist. Sowohl das Glattblech (14) als auch das Wellblech (16) des Trägerkörpers (13) sind aus einem hochtemperaturbeständigen korrosionsfesten Metallblech hergestellt.

Durch den vorstehend beschriebenen Aufbau des Trägerkörpers (13) wird eine vom Abgas durchströmbare Struktur mit Zwischenräumen (15) gebildet, die von dem in Richtung der Pfeile (26 und 28) strömenden Abgas durchströmt werden. Hierbei tritt das Abgas an einer vorderen Stirnseite (17) des Trägerkörpers (13) in diesen ein und verläßt diesen an einer hinteren Stirnseite (19). Während dieser Durchströmung des Trägerkörpers (13) findet die Konvertierung der Abgases statt.

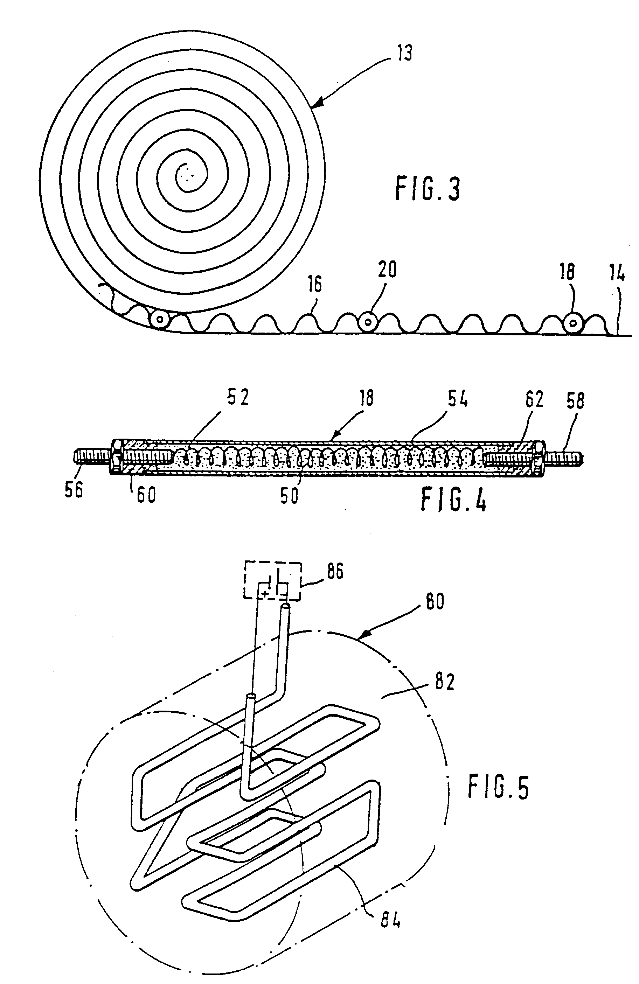

In den Trägerkörper (13) sind über dessen Querschnitt verteilt mehrere elektrische Heizelemente (18, 20, 22, 24) eingebracht, die jeweils prinzipiell gleichartig aufgebaut sind. In Fig. 4 ist ein derartiges Heizelement (18) in vergrößerter Darstellung gezeigt. Das Heizelement (18) und auch alle weiteren Heizelemente besitzen eine Heizwendel (50), die zwischen zwei mit Abstand zueinander angeordneten Anschlüssen (56 und 58) spiralförmig verlegt ist. Gegenüber dem zylindrischen Mantelrohr (54) ist die Heizwendel (50) durch eine Isolierschicht (52) isoliert. Hierbei kann beispielsweise eine gepreßte Sandschicht Verwendung finden. Die Isolierung des zylindrischen Mantelrohres (54) gegenüber den Anschlüssen (56, 58) erfolgt mittels Keramikisolatoren (60, 62), die an den sich gegenüberliegenden Stirnseiten des Mantelrohres (54) angeordnet sind.

Wie aus Fig. 1 hervorgeht, ist die Länge der Heizelemente (18, 20, 22, 24) derart bemessen, daß zumindest die Anschlüsse (56, 58) die Stirnseiten (17, 19) des Trägerkörpers (13) in axialer Richtung überragen. In nicht näher dargestellter Weise sind die Anschlüsse (56, 58) der Heizelemente (18, 20, 22, 24) mit der Stromversorgung (34) des Kraftfahrzeuges verbunden. Demgemäß erfolgt die elektrische Auslegung der Heizelemente (18, 20, 22, 24) derart, daß sie mit der heute in Kraftfahrzeugen üblicherweise zur Verfügung stehenden Spannung von 12 Volt betrieben werden können.

Wie aus der Darstellung gemäß Fig. 1 hervorgeht, befinden sich die Anschlüsse der Heizelemente (18, 20, 22, 24) im Bereich des Abgasstromes. In nicht näher dargestellter Weise können die im Bereich einer Stirnseite (17, 19) gelegenen Anschlüsse der Heizelemente (18, 20, 22, 24) miteinander verbunden werden und jeweils an eine gemeinsame Stromleitung (30, 32) angeschlossen werden. Abweichend von der Darstellung gemaß Fig. 1 kann hierbei auch die Leitfähigkeit des Mantelrohres (12) ausgenutzt werden. In diesem Fall wird die Leitung (32) mit dem Mantelrohr (12) verbunden, welches wiederum in Verbindung mit einem Pol der Stromversorgung (34) steht.

Aus Fig. 2 wird deutlich, daß die Heizelemente (18, 20, 22, 24) in die Wellenform des Wellbleches (16) eingelagert sind. Hierdurch entfallen besondere Befestigungsmaßnahmen für die Heizelemente (18, 20, 22, 24), um deren sichere Fixierung im Querschnitt des Trägerkörpers (13) zu gewährleisten. Da der Durchmesser der Heizelemente (18, 20, 22, 24) der Wellenform des Wellbleches (16) angepaßt ist, wird ein besonders guter Flächenkontakt zwischen dem Mantelrohr (54) des Heizelementes und den Metallblechen (14 und 16) des Trägerkörpers und damit eine gute Wärmeübertragung gewährleistet, da eine große Wärmeübergangsfläche zur Verfügung steht. Dies führt einerseits zu einer sehr schnellen Erhitzung des Trägerkörpers (13) und verhindert andererseits punktuelle Überhitzungen, die zu einer Zerstörung des Trägerkörpers (13) führen können. Die gleichmäßige Erhitzung des Trägerkörpers (13) über dessen gesamten Querschnitt wird durch eine Vielzahl von über den Querschnitt verteilten Heizelementen (18, 20, 22, 24) erreicht.

Anhand Fig. 3 soll die Herstellung des in den Fig. 1 und 2 dargestellten Abgaskatalysators erläutert werden. Der Trägerkörper (13) wird durch spiralförmige Wicklung eines bandförmigen Glattbleches (14) und eines bandförmigen Wellbleches (16) hergestellt. Vor dem Aufwickeln des Trägerkörpers (13) wird die gewünschte Anzahl an Heizelementen (18, 20) mit Abstand zueinander in die Wellenform des Wellbleches (16) eingelegt. Beim nachfolgenden Aufwickeln des Trägerkörpers (13) werden die elektrischen Heizelemente (18, 20) fest in die Struktur des Trägerkörpers (13) eingebunden. Durch ein derartiges Herstellungsverfahren entfällt das nachträgliche Einbringen der elektrischen Heizelemente in die Struktur des Trägerkörpers (13). Außerdem wird eine besonders feste Einbindung und somit ein besonders fester Trägerkörper (13) erzielt. Die zylinderförmigen, in Fig. 4 dargestellten Heizelemente, tragen weiterhin zu einer Erhöhung der Festigkeit des Trägerkörpers (13) bei.

Da die elektrischen Heizelemente (18, 20, 22, 24) selbstisolierend ausgebildet sind, sind am Trägerkörper (13) keine weiteren Isolationsmaßnahmen auszuführen. Somit können Isolationsschichten entfallen, die bei den bekannten Bauarten zu einer Verringerung der Festigkeit des Trägerkörpers (13) führen.

Bei einer nicht dargestellten Ausführungsform sind statt der zylinderförmigen Heizelemente ebene oder folienförmige Heizelemente vorgesehen, die auf dem Glattband (14) aufgebracht sind. Da derartige Heizelemente biegsam sind, kann auch hiermit eine spiralförmige Struktur eines Trägerkörpers erzielt werden. Es ist aber auch möglich, was ebenfalls nicht dargestellt ist, einen schichtweise aufgebauten Trägerkörper herzustellen.

Eine weitere Ausführungsform der Erfindung ist in Fig. 5 schematisch dargestellt. Der hier dargestellte Abgaskatalysator (80) besitzt ein zylinderförmiges Mantelgehäuse (82), das einen nicht dargestellten Trägerkörper aufnimmt. Der aus metallischen Blechen hergestellte Trägerkörper ist in der prinzipiell bekannten Sternwickeltechnik (siehe DE-PS 40 16 276) hergestellt worden. Dieser Trägerkörper besteht ebenfalls aus mit Abstand zueinander angeordneten Glattblechen, wobei in den Zwischenräumen Wellbleche angeordnet sind. Bei der Herstellung des Abgaskatalysators wird vor dem Wickeln des Trägerkörpers ein vorgeformtes elektrisches Heizelement (84) zwischen die Blechstapel eingebracht, dessen Formgebung aus Fig. 5 hervorgeht. Elektrische Heizelemente, die sich für eine derartige Formgebung eignen, sind prinzipiell im Handel erhältlich. Wie aus der Darstellung hervorgeht, besitzt das schlauchförmige elektrische Heizelement eine dreidimensionale mäanderförmige Formgebung. Die an den Endbereichen angeordneten elektrischen Anschlüsse des Heizelementes (84) sind mit der Stromversorgung (86) des Kraftfahrzeuges verbunden.

Auch bei dieser Ausführungsform der Erfindung sind durch das selbstisolierend ausgeführte Heizelement (84) keine weiteren Isolationsmaßnahmen, die die Festigkeit des Trägerkörpers beeinträchtigen könnten, erforderlich. Vielmehr wird durch das mäanderförmige elektrische Heizelement (84) die Festigkeit des Trägerkörpers weiter erhöht. Da das Heizelement (84) über die gesamte Querschnittsfläche des Abgaskatalysators (80) gleichmäßig verteilt ist, wird eine schnelle und gleichmäßige Aufheizung erzielt. Örtliche Überhitzungen am Trägerkörper können somit nicht auftreten.

Mit den zuvor beschriebenen Ausführungsformen ist eine schnelle und gleichmäßige Aufheizung der erfindungsgemäßen Abgaskatalysatoren möglich. Hierdurch wird in besonders schneller Weise ein hoher Wirkungsgrad der Abgaskatalysatoren erzielt. Die zum Einsatz kommenden selbstisolierenden Heizelemente benötigen keine weiteren Isolationsmaßnahmen, so daß eine hohe Festigkeit der Trägerkörper erzielt wird.

## Patentansprüche

1. Abgaskatalysator, insbesondere für einen Verbrennungsmotor, mit einem aus Metallblechlagen aufgebauten und eine vom Abgas durchströmbare Struktur aufweisendenden Trägerkörper mit einer katalytischen Beschichtung, der in einem das Abgas führenden Strömungskanal angeordnet ist und der extern elektrisch aufheizbar ist, wobei zusätzlich zu der Struktur mindestens ein gesondertes, elektrisch von der Struktur isoliert ausgebildetes Heizelement (18, 84) vorhanden ist, das mit den Metallblechen (14) des Trägerkörpers (13) und/oder deren Beschichtung in enger thermischer Verbindung steht, dadurch gekennzeichnet, daß der Abgaskatalysator zumindest teilweise strukturierte Metallblechlagen (16) aufweist, wobei mindestens ein Heizelement (18, 20) der Form einer der zumindest teilweise strukturierten Metallblechlagen (16) angepaßt ist.

2. Abgaskatalysator nach Anspruch 1, dadurch gekennzeichnet, daß mindestens ein zylinderförmiges oder stabförmiges elektrisches Heizelement (18, 20) vorgesehen ist, dessen Durchmesser an die Strukturierung der Metallblechlagen (16) angepaßt ist.

3. Abgaskatalysator nach Anspruch 1 oder 2 mit zumindest teilweise gewellten Metallblechlagen (16), dadurch gekennzeichnet, daß das mindestens eine stabförmige Heizelement (18, 20) an einem Wellblech (16) des Trägerkörpers (13) gehalten ist.

4. Abgaskatalysator nach Anspruch 3, dadurch gekennzeichnet, daß die Wellenform des Wellbleches (16) an den Durchmesser des Heizelementes (18, 29) angepaßt ist.

5. Abgaskatalysator nach einem der Ansprüche 1 bis 4, dadurch gekennzeichnet, daß der Trägerkörper (13) aus mindestens einem spiralförmig gewickelten Glattblech (14) besteht, wobei zwischen den Wickellagen des Glattbleches (14) eine durchströmbare Wellblechlage (16) angeordnet ist, in die mehrere stabförmige Heizelemente (18, 20, 22, 24) mit Abstand zueinander eingelegt sind.

6. Abgaskatalysator nach einem der Ansprüche 2 bis 5, dadurch gekennzeichnet, daß die sich gegenüberliegenden Anschlüsse (56, 58) des mindestens einen elektrischen Heizelementes (18, 20, 22, 24) aus den Stirnseiten (17, 19) des Trägerkörpers (13) herausgeführt und mit einer Spannungsquelle (34) verbunden sind.

7. Abgaskatalysator nach Anspruch 6, dadurch gekennzeichnet, daß die einer Stirnseite (17, 19) zugeordneten Anschlüsse (56, 58) mehrerer elektrischer Heizelemente (18, 20, 22, 24) miteinander verbunden sind, wobei zumindest eine Gruppe von Anschlüssen mit einem durch ein Mantelgehäuse (12) des Trägerkörpers (13) geführten Stromkabel (30, 32) versehen ist.

8. Verfahren zur Herstellung eines Abgaskatalysators nach einem der Ansprüche 5 bis 7, bei dem ein aus korrosionsfesten strukturierten Metallblechen (14, 16) aufgebauter Trägerkörper gewickelt, geschlungen oder geschichtet wird, dadurch gekennzeichnet, daß vor dem Wickeln, Schlingen bzw. Schichten der Form der strukturierten Metallbleche (16) angepaßte Heizelemente (18, 20, 22, 24) mit Abstand zueinander in die strukturierten Metallbleche (16) eingelegt werden und anschließend der Trägerkörper (13) gewickelt, geschlungen oder geschichtet wird.

9. Verfahren nach Anspruch 8, dadurch gekennzeichnet, daß ein ebenes biegsames Heizelement bei der Wicklung des Trägerkörpers zusammen mit den strukturierten Metallblechen (14, 16) eingewickelt wird.

10. Abgaskatalysator nach Anspruch 1, dadurch gekennzeichnet, daß der Trägerkörper aus in Sternwickeltechnik angeordneten Metallblechen besteht und in den Trägerkörper ein vorgeformtes Heizelement (84) eingebracht ist, das eine der Durchströmungsstruktur des Trägerkörper angepaßte Formgebung aufweist.

11. Abgaskatalysator nach Anspruch 10, dadurch gekennzeichnet, daß das Heizelement (84) eine dreidimensionale mäanderförmige Struktur aufweist.

12. Abgaskatalysator nach einem der Ansprüche 1 bis 7 oder 10 oder 11, dadurch gekennzeichnet, daß mehrere Heizelemente vorgesehen sind, die über den Querschnitt und/oder in der Tiefe des Trägerkörpers verteilt angeordnet sind.

## Claims

1. An exhaust gas catalytic converter, in particular for an internal combustion engine, having a carrier body with a catalytic coating, the carrier body being made up from metal sheet layers and having a structure through which the exhaust gas can flow and being arranged in a flow passage which carries the exhaust gas and being externally electrically heatable, wherein in addition to the structure there is at least one separate heating element (18, 84) which is designed to be electrically insulated from the structure and which is in close thermal relationship with the metal sheets (14) of the carrier body (13) and/or the coating thereof, characterised in that the exhaust gas catalytic converter has at least partially structured metal sheet layers (16), wherein at least one heating element (18, 20) is matched to the shape of one of the at least partially structured metal sheet layers (16).

2. An exhaust gas catalytic converter according to claim 1 characterised in that there is provided at least one cylindrical or bar-shaped electrical heating element (18, 20) whose diameter is matched to the structuring of the metal sheet layers (16).

3. An exhaust gas catalytic converter according to claim 1 or claim 2 with at least partially corrugated metal sheet layers (16) characterised in that the at least one bar-shaped heating element (18, 20) is held to a corrugated sheet (16) of the carrier body (13).

4. An exhaust gas catalytic converter according to claim 3 characterised in that the corrugated shape of the corrugated sheet (16) is matched to the diameter of the heating element (18, 20).

5. An exhaust gas catalytic converter according to one of claims 1 to 4 characterised in that the carrier body (13) comprises at least one spirally wound smooth sheet (14), wherein arranged between the winding layers of the smooth sheet (14) is a corrugated sheet layer (16) through which the gas can flow and into which are inserted a plurality of bar-shaped heating elements (18, 20, 22, 24) at a spacing relative to each other.

6. An exhaust gas catalytic converter according to one of claims 2 to 5 characterised in that the mutually oppositely disposed connections (56, 58) of the at least one electrical heating element (18, 20, 22, 24) are passed out of the ends (17, 19) of the carrier body (13) and connected to a voltage source (34).

7. An exhaust gas catalytic converter according to claim 6 characterised in that the connections (56, 58), which are associated with one end (17, 19), of a plurality of electrical heating elements (18, 20, 22, 24) are connected together, wherein at least one group of connections is provided with a power cable (30, 32) which is passed through a peripheral casing (12) of the carrier body (13).

8. A process for the production of an exhaust gas catalytic converter according to one of claims 5 to 7 wherein a carrier body which is made up from corrosion-resistant, structured metal sheets (14, 16) is wound, coiled or stacked, characterised in that prior to the winding, coiling or stacking operation heating elements (18, 20, 22, 24) which are matched to the shape of the structured metal sheets (16) are inserted at a spacing relative to each other into the structured metal sheets (16) and then the carrier body (13) is wound, coiled or stacked.

9. A process according to claim 8 characterised in that in the operation of winding the carrier body a flat flexible heating element is wound in together with the structured metal sheets (14, 16).

10. An exhaust gas catalytic converter according to claim 1 characterised in that the carrier body comprises metal sheets which are arranged in a star winding configuration and introduced into the carrier body is a preshaped heating element (84) which is of a configuration which is matched to the through-flow structure of the carrier body.

11. An exhaust gas catalytic converter according to claim 10 characterised in that the heating element (84) has a three-dimensional meander-like structure.

12. An exhaust gas catalytic converter according to one of claims. 1 to 7 or 10 or 11 characterised in that there are provided a plurality of heating elements which are arranged distributed over the cross-section and/or in the depth of the carrier body.

## Revendications

1. Catalyseur de gaz d'échappement, en particulier pour un moteur à combustion interne, comprenant un corps porteur qui est constitué de couches en tôle métallique et comporte une structure pouvant être parcourue par les gaz d'échappement et qui comporte un revêtement catalytique qui est disposé dans un canal d'écoulement transportant les gaz d'échappement et qui peut être chauffé électrique-ment de l'extérieur, en plus de la structure étant également prévu au moins un élément chauffant séparé (18, 84) qui est isolé électriquement de la structure et qui est en étroite liaison thermique avec les tôles métalliques (14) du corps porteur (13) et/ou avec son revêtement, caractérisé en ce que le catalyseur de gaz d'échappement comporte des couches en tôle métallique au moins partiellement structurées (16), au moins un élément chauffant (18, 20) étant adapté à la forme de l'une des couches en tôle métallique au moins partiellement structurées (16).

2. Catalyseur de gaz d'échappement selon la revendication 1, caractérisé en ce qu'il est prévu au moins un élément chauffant électrique (18, 20) en forme de cylindre ou de barre, dont le diamètre est adapté à la structure des couches en tôle métallique (16).

3. Catalyseur de gaz d'échappement selon la revendication 1 ou 2 comprenant des couches en tôle métallique au moins partiellement ondulée (16), caractérisé en ce que l'élément chauffant en forme de barre (18, 20), au nombre d'au moins un, est maintenu contre une tôle ondulée (16) du corps porteur (13).

4. Catalyseur de gaz d'échappement selon la revendication 3, caractérisé en ce que la forme ondulée de la tôle ondulée (16) est adaptée au diamètre de l'élément chauffant (18, 29).

5. Catalyseur de gaz d'échappement selon l'une des revendications 1 à 4, caractérisé en ce que le corps porteur (13) est constitué d'au moins une tôle lisse (14) enroulée en spirale, entre les couches d'enroulement de la tôle lisse (14) étant disposée une couche en tôle ondulée (16) qui peut être parcourue par les gaz d'échappement et dans laquelle plusieurs éléments chauffants en forme de barres (18, 20, 22, 24) sont insérés à distance les uns des autres.

6. Catalyseur de gaz d'échappement selon l'une des revendications 2 à 5, caractérisé en ce que les connexions opposées (56, 58) de l'élément chauffant électrique (18, 20, 22, 24), au nombre d'au moins un, sortent à travers les faces frontales (17, 19) du corps porteur (13) et sont reliées à une source de tension (34).

7. Catalyseur de gaz d'échappement selon la revendication 6, caractérisé en ce que les connexions (56, 58) de plusieurs éléments chauffants électriques (18, 20, 22, 24) associées à l'une des faces frontales (17, 19) sont reliées entre elles, au moins un groupe de connexions étant muni d'un câble de courant (30, 32) traversant un carter (12) du corps porteur (13).

8. Procédé de fabrication d'un catalyseur de gaz d'échappement conforme à l'une des revendications 5 à 7, dans lequel un corps porteur constitué de tôles métalliques (14, 16) structurées et résistantes à la corrosion est enroulé, mis en boucles ou mis en couches, caractérisé en ce que, préalablement à l'enroulement, à la formation de boucles ou à la mise en couches, des éléments chauffants (18, 20, 22, 24) adaptés à la forme des tôles métalliques structurées (16) sont insérés dans les tôles métalliques structurées (16) à distance les uns des autres, après quoi le corps porteur (13) est enroulé, mis en boucle ou disposé en couches.

9. Procédé selon la revendication 8, caractérisé en ce qu'un élément chauffant plan flexible est enroulé avec les tôles métalliques structurées (14, 16) lors de l'enroulement du corps porteur.

10. Catalyseur de gaz d'échappement selon la revendication 1, caractérisé en ce que le corps porteur est constitué de tôles métalliques disposées selon la technique d'enroulement en étoile, et dans le corps porteur est inséré un élément chauffant préformé (84) qui présente une configuration adaptée à la structure d'écoulement du corps porteur.

11. Catalyseur de gaz d'échappement selon la revendication 10, caractérisé en ce que l'élément chauffant (84) présente une structure tridimensionnelle à méandres.

12. Catalyseur de gaz d'échappement selon l'une des revendications 1 à 7 ou 10 ou 11, caractérisé en ce qu'il est prévu plusieurs éléments chauffants qui sont répartis sur la section transversale et/ou sur la profondeur du corps porteur.
